# EUROPÄISCHE PATENTSCHRIFT

(11) **EP 1 763 200 B1**
(45) Veröffentlichungstag und Bekanntmachung des Hinweises auf die Patenterteilung: **06.01.2016**
(21) Anmeldenummer: 05405529.8
(22) Anmeldetag: 08.09.2005
(51) Int. Cl.: H04L 29/08

(54) **Computersystem und Verfahren zur Übermittlung von kontextbasierten Daten**
Computersystem and method for transmitting context-based data
Système informatique et procédé pour transmettre des données dépendant du contexte

(43) Veröffentlichungstag der Anmeldung: 14.03.2007
(73) Patentinhaber: Swisscom AG, 3050 Bern (CH)
(72) Erfinder: Heissenbüttel, Marc, 3011 Bern (CH); Danzeisen, Marc, 3063 Ittigen (CH); Mauron Stefan, 3045 Meikirch (CH); Linder, Jan, 3013 Bern (CH)
(74) Vertreter: Rentsch Partner AG

(56) Entgegenhaltungen:
- EP-A- 1 530 342
- US-A1- 2004 199 663
- US-A1- 2004 254 998

## Beschreibung

### Technisches Gebiet

Die vorliegende Erfindung betrifft ein Computersystem und ein Verfahren zur Datenübermittlung. Die vorliegende Erfindung betrifft insbesondere ein Computersystem und ein Verfahren zur Übermittlung von kontextspezifischen Daten über ein Mobilfunknetz an ein mobiles Kommunikationsendgerät.

### Stand der Technik

Ein häufiger Kontextwechsel ist eine inhärente Eigenschaft der mobilen Kommunikation. Mobile Kommunikationsendgeräte wie Mobilfunktelefone oder Personal Computers und PDAs (Personal Digital Assistants), die für die mobile Kommunikation über Funknetze eingerichtet sind, wechseln ständig ihren Standort innerhalb eines Kommunikationsnetzes oder bewegen sich in andere Kommunikationsnetze, beispielsweise besuchen sie ein Netz, das von einem fremden Betreiber betrieben wird, oder sie greifen über einen anderen Zugriffspunkt auf ein drahtloses Funknetz zu. Neben dem Wechsel innerhalb eines oder zwischen mehreren Kommunikationsnetzen, wechseln mobile Kommunikationsnetze auch zwischen verschiedenen peripheren Vorrichtungen, mit welchen sie über verschiedene drahtlose Schnittstellen interagieren, beispielsweise mit Zahlungsterminals, Ticketterminals, Zugangskontrollvorrichtungen, Drucker, Scanner oder Computers, sowie diesbezüglichen Softwareapplikationen. In diesem ständigen Wechsel sind die mobilen Kommunikationsendgeräte dauernd einem Kontextwechsel ausgesetzt, welcher bedingt, dass die mobilen Kommunikationsendgeräte kontextspezifisch mit unterschiedlichen Betriebsparametern und/oder Softwareelementen operieren müssen, mit verschiedenen kryptografischen Mitteln und Berechtigungen versehen werden müssen, und/oder dass die Benutzer der mobilen Kommunikationsendgeräte kontextspezifisch mit Informationen beliefert werden müssen. Da der im mobilen Kommunikationsendgerät zur Speicherung der kontextspezifischen Datenelemente benötigte Speicherplatz in Anbetracht der beinahe unbegrenzten Anzahl möglicher Kontextwechsel sehr gross wäre und dem mobilen Kommunikationsendgerät kontextspezifische Datenelemente auch für unvorhergesehene respektive neue Kontextwechsel zur Verfügung gestellt werden müssen, ist es von Vorteil, die bei einem Kontextwechsel im mobilen Kommunikationsendgerät zu verwendenden kontextspezifischen Datenelemente dem mobilen Kommunikationsterminal dynamisch zuzuführen.

In EP 1 530 342 wird ein Datenübermittlungsverfahren beschrieben, in welchem Dateninhalte von einem Server an ein mobiles Kommunikationsendgerät übermittelt werden. Es werden auch den Dateninhalten zugeordnete Betriebsbedingungen an das mobile Kommunikationsendgerät übermittelt. Die Betriebsbedingungen bestimmen einen definierten Bereich innerhalb dessen die Dateninhalte weitergeleitet werden dürfen. Das mobile Kommunikationsendgerät bestimmt seine aktuelle Position und leitet die Dateninhalte nur dann an ein anderes Kommunikationsendgerät weiter, wenn die aktuelle Position innerhalb des definierten Bereichs liegt.

Gemäss US 2004/0199663 werden in einem zentralisierten Server Informationen über Client/Server-Interaktionen eines Benutzers erfasst. Diese Informationen, beispielsweise die Zeit der letzten Interaktion, die gegenwärtige oder vergangene Präsenz oder ein vorausgesagter Zugriffszeitpunkt, werden bei der Wegleitung von Meldungen berücksichtigt.

### Darstellung der Erfindung

Es ist eine Aufgabe der vorliegenden Erfindung ein Computersystem und ein Verfahren vorzuschlagen, welche ermöglichen kontextspezifische Daten über ein Mobilfunknetz dynamisch an ein mobiles Kommunikationsendgerät zu übermitteln. Es ist insbesondere eine Aufgabe der vorliegenden Erfindung ein Computersystem und ein Verfahren zur Übermittlung von kontextspezifischen Daten über ein Mobilfunknetz an ein mobiles Kommunikationsendgerät vorzuschlagen, welche kontextspezifischen Daten ermöglichen das mobile Kommunikationsendgerät auf einen Kontextwechsel einzurichten, der sich durch den Wechsel in ein Kommunikationsnetz oder durch Interaktion mit einer peripheren, d.h. zum mobilen Kommunikationsendgerät externen Vorrichtung ergibt. Es ist insbesondere eine weitere Aufgabe der vorliegenden Erfindung ein Computersystem und ein Verfahren zur Übermittlung von kontextspezifischen Daten über ein Mobilfunknetz an ein mobiles Kommunikationsendgerät vorzuschlagen, welches Computersystem und welches Verfahren sicherstellen, dass die kontextspezifischen Daten nur an ein berechtigtes mobiles Kommunikationsendgerät übermittelt werden, welches bestimmte Bedingungen erfüllt.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass ein Computersystem bereitgestellt wird zur Übermittlung von kontextspezifischen Daten über ein Mobilfunknetz an ein erstes mobiles Kommunikationsendgerät, wobei im Computersystem Bedingungsdaten entgegengenommen und gespeichert werden, die Datenelementen von einer Datenlieferungseinheit zugeordnet sind. Im Computersystem wird zudem überprüft, ob ein zweites mobiles Kommunikationsendgerät eine oder mehrere Bedingungen erfüllt, die durch die Bedingungsdaten definiert werden. Schliesslich wird vom Computersystem die Übermittlung von kontextspezifischen Datenelementen an das erste mobile Kommunikationsendgerät ausgelöst, wenn vom zweiten mobilen Kommunikationsendgerät mindestens eine der Bedingungen erfüllt wird. Die kontextspezifischen Datenelementen sind Bedingungsdaten zugeordnet, welche eine vom zweiten mobilen Kommunikationsendgerät erfüllte Bedingung definieren. Die Datenelemente umfassen beispielsweise Betriebsparameter für das erste mobile Kommunikationsendgerät, eine elektronische Nachricht, einen elektronischen Datenwert und/oder ein Softwareelement für eine Softwareapplikation. Durch die Zuordnung von Bedingungsdaten zu Datenelementen werden eine oder mehrere Bedingungen für die Auslieferung der betreffenden Datenelemente definiert. Wenn ein mobiles Kommunikationsendgerät eine oder mehrere der durch die Bedingungsdaten definierten Bedingungen erfüllt, liegt für das betreffende mobile Kommunikationsendgerät ein bestimmter Kontext vor. Um das mobile Kommunikationsendgerät an den neuen bestimmten Kontext anzupassen, werden die den betreffenden Bedingungsdaten zugeordneten Datenelemente als kontextspezifische Daten an das mobile Kommunikationsendgerät ausgeliefert. Durch die Übermittlung und Speicherung der Bedingungsdaten an das Computersystem kann die Kontextüberwachung für die mobilen Kommunikationsendgeräte in einen dedizierten Computer ausgelagert werden, so dass diese Aufgabe beispielsweise nicht durch eine Datenlieferungseinheit übernommen werden muss, was die Realisierung mehrerer unabhängiger verteilter Datenlieferungseinheiten vereinfacht. Die Kontextüberwachung durch das Computersystem und die durch das Computersystem ausgelöste kontextspezifische Datenübermittlung ermöglichen die automatische Versorgung von mobilen Kommunikationsendgeräten mit kontextspezifischen Datenelementen, ohne die mobilen Kommunikationsendgeräte dazu mit Kontextüberwachungs- und Kontexterkennungsfunktionen belasten zu müssen und ohne in den mobilen Kommunikationsendgeräten Kontextregeln speichern zu müssen. Gleichzeitig ermöglicht die bedingungsgebundene Datenübermittlung die zu übermittelnden Datenelemente nur an eines oder mehrere berechtigte mobile Kommunikationsendgeräte zu übermitteln, welche die bestimmten Bedingungen erfüllen.

In verschiedenen Ausführungsvarianten sind das erste mobile Kommunikationsendgerät und das zweite mobile Kommunikationsendgerät zwei separate mobile Kommunikationsendgeräte, oder das erste mobile Kommunikationsendgerät und das zweite mobile Kommunikationsendgerät sind ein und das selbe mobile Kommunikationsendgerät. Das heisst die kontextspezifischen Daten werden in der ersteren Variante auf Grund von Bedingungen, die durch das zweite mobile Kommunikationsendgerät erfüllt werden, an ein anderes erstes mobiles Kommunikationsendgerät übermittelt, wohingegen, in der letzteren Variante, die kontextspezifischen Daten an das selbe mobile Kommunikationsendgerät übertragen werden, durch welches auch die Bedingungen erfüllt werden.

In einer bevorzugten Ausführungsvariante ist das Computersystem eingerichtet, basierend auf aktuellen dem zweiten mobilen Kommunikationsendgerät zugeordneten Attributdaten und diesbezüglichen Bedingungsdaten zu Überprüfen, ob das zweite mobile Kommunikationsendgerät die durch die Bedingungsdaten definierte(n) Bedingung(en) erfüllt. Die aktuellen Attributdaten umfassen beispielsweise Angaben über die aktuelle geografische Position des mobilen Kommunikationsendgeräts, den aktuell verwendeten Netzwerkzugriffspunkt, die Netzwerkidentifizierung, die Netzwerkadresse und/oder den Netzwerktyp des aktuellen Netzwerks, die Teilnehmeridentifizierung, ein bestimmtes Zertifikat und/oder Passwort, und/oder den Gerätetyp und die Gerätekonfiguration des mobilen Kommunikationsendgeräts. Vorzugsweise ist das Computersystem eingerichtet, die aktuellen dem zweiten mobilen Kommunikationsendgerät zugeordneten Attributdaten von einer Netzwerkeinheit des Mobilfunknetzes zu beziehen. Dadurch dass das Computersystem eingerichtet ist, auf eine Netzwerkeinheit des Mobilfunknetzes, beispielsweise ein HLR (Home Location Register) oder VLR (Visitors Location Register) zuzugreifen und aktuelle Attributdaten über mobile Kommunikationsendgeräte zu beziehen, ist es für das Computersystem möglich, teilnehmerspezifische respektive endgerätespezifische Attributdaten vom Mobilfunknetz respektive vom Betreiber des Mobilfunknetzes als Grundlage für die Kontextbeurteilung zu verwenden. Wenn das Computersystem in vorteilhafter Weise in der Netzwerkinfrastruktur des Betreibers des Mobilfunknetzes eingerichtet ist, können netzwerkinterne teilnehmerspezifische respektive endgerätespezifische Attributdaten effizient für die Kontextüberwachung verwendet werden, ohne dass diese sensitiven Attributdaten über Kommunikationsverbindungen an externe Einheiten, beispielsweise die Datenlieferungseinheit, übermittelt werden müssen. In einer Ausführungsvariante umfassen die Attributdaten zudem auch Benutzerattributdaten, z.B. Benutzerprofile, Teilnehmerabonnemente, oder aktuelle biometrische Werte des Benutzers wie der Blutdruck, die Körpertemperatur oder die Pulsfrequenz des Benutzers. Die Benutzerattributdaten werden typischerweise vom mobilen Kommunikationsendgerät oder von einer zugeordneten Messeinheit geliefert.

In einer Ausführungsvariante ist das Computersystem eingerichtet, einen Bedingungserfüllungsnachweis, beispielsweise eine verschlüsselte Bestätigung, vom zweiten mobilen Kommunikationsendgerät entgegenzunehmen, den Bedingungserfüllungsnachweis zu überprüfen, beispielsweise durch Entschlüsselung der Bestätigung, Bedingungsdaten zu bestimmen, die dem Bedingungserfüllungsnachweis zugeordnet sind, und die Übermittlung der kontextspezifischen Datenelemente, die den bestimmten Bedingungsdaten zugeordnet sind, über das Mobilfunknetz an das erste mobile Kommunikationsendgerät auszulösen. Die Auslösung der Datenübermittlung auf Grund eines empfangenen Bedingungserfüllungsnachweises ermöglicht die bedingte Datenübermittlung an mobile Kommunikationsendgeräte oder andere Vorrichtungen, die für das Computersystem nicht für eine Bedingungsprüfung zugänglich sind. Im nicht zugänglichen mobilen Kommunikationsendgerät oder in der nicht zugänglichen Vorrichtung wird die Erfüllung einer durch die Bedingungsdaten definierten Bedingung überprüft und ein Bedingungserfüllungsnachweis generiert und über das zweite mobile Kommunikationsendgerät an das Computersystem übermittelt. Der Bedingungserfüllungsnachweis wird beispielsweise von der Vorrichtung über eine Geräteschnittstelle, z.B. Bluetooth, an das zweite mobile Kommunikationsendgerät übertragen. Mit anderen Worten es kann quasi eine "off-line" Bedingungsüberprüfung durchgeführt werden.

In einer Ausführungsvariante ist das Computersystem eingerichtet, Datenelemente, die den Bedingungsdaten zugeordnet sind, von der Datenlieferungseinheit entgegenzunehmen und die Datenelemente den Bedingungsdaten zugeordnet zu speichern. Das Computersystem ist zudem eingerichtet, die kontextspezifischen Datenelemente an das erste mobile Kommunikationsendgerät zu übermitteln. Diese Variante ermöglicht einer Datenlieferungseinheit nicht nur die Kontextüberwachung, sondern auch die eigentliche Auslieferung der kontextspezifischen Daten an das Computersystem auszulagern, wodurch bei der Auslieferung der kontextspezifischen Daten kein Datenaustausch zwischen dem Computersystem und der Datenlieferungseinheit erforderlich ist (welcher die Auslieferung verzögern würde).

In einer Ausführungsvariante ist das Computersystem eingerichtet, Zuordnungsangaben, welche die Bedingungsdaten den Datenelementen der Datenlieferungseinheit zuordnen, entgegenzunehmen und zu speichern. Das Computersystem ist zudem eingerichtet, die Übermittlung der kontextspezifischen Datenelemente durch Übermittlung einer Freigabeinstruktion an die Datenlieferungseinheit auszulösen. Diese Variante, die als alternative oder ergänzende Ausführung zur oben stehenden Variante eingerichtet ist, ermöglicht eine klare Trennung der Aufgaben auf das Computersystem, das die Kontextüberwachung durchführt, und die Datenlieferungseinheit, die die kontextspezifischen Daten an das mobile Kommunikationsendgerät übermittelt. Diese Variante hat den Vorteil, dass das Computersystem von der Speicherung von kontextspezifischen Daten entlastet werden kann.

In einer Ausführungsvariante ist das Computersystem eingerichtet zum Entgegennehmen und Speichern von Anweisungen, welche den Bedingungsdaten und/oder den kontextspezifischen Datenelementen zugeordnet sind. Das Computersystem ist zudem eingerichtet, die Übermittlung der kontextspezifischen Datenelemente entsprechend den betreffenden Anweisungen auszulösen, wobei verschiedene der kontextspezifischen Datenelemente an das erste mobile Kommunikationsendgerät und/oder an eine andere Vorrichtung zu übermitteln sind. Die Möglichkeit Anweisungen den Bedingungsdaten und/oder kontextspezifischen Datenelementen zuzuordnen erlaubt eine flexible Spezifikation der Auslieferung der kontextspezifischen Daten an einen oder mehrere Empfänger. Die Datenelemente umfassen beispielsweise Betriebsparameter für eine Vorrichtung sowie ein den Betriebsparametern zugeordnetes kryptografisches Schlüsselpaar. Entsprechend den Anweisungen löst das Computersystem beispielsweise die Übermittlung der Betriebsparameter sowie eines der zugeordneten kryptografischen Schlüssel an die Vorrichtung und die Übermittlung eines der zugeordneten kryptografischen Schlüssel an das erste mobile Kommunikationsendgerät aus. Durch die Auslieferung der Schlüssel eines kontextspezifischen Schlüsselpaars an das mobile Kommunikationsendgerät und an die weitere Vorrichtung, kann der Zugriff vom mobilen Kommunikationsendgerät auf diese Vorrichtung auf der Basis der Schlüssel kontrolliert werden. Die Vorrichtung kann zudem mittels der Betriebsparameter kontextspezifisch an die Interaktion mit dem mobilen Kommunikationsendgerät angepasst werden.

In einer Ausführungsvariante ist das Computersystem eingerichtet, die durch die Bedingungsdaten definierte(n) Bedingung(en) periodisch oder auf Grund einer empfangenen Nachricht zu überprüfen. Die Nachricht wird beispielsweise vom zweiten mobilen Kommunikationsendgerät, von einer Netzwerkeinheit des Telekommunikationsnetzes oder vom Computersystem übermittelt respektive initiiert.

In verschiedenen Ausführungsvarianten ist die Datenlieferungseinheit extern zum Computersystem oder direkt im Computersystem angeordnet.

Neben einem Verfahren und einem Computersystem zur Übermittlung von kontextspezifischen Daten über ein Mobilfunknetz an ein mobiles Kommunikationsendgerät betrifft die vorliegende Erfindung zudem ein Computerprogrammprodukt, das Computerprogrammcodemittel umfasst zur Steuerung eines oder mehreren Prozessors eines Computers, so dass der Computer das erfindungsgemässe Verfahren ausführt respektive das erfindungsgemässe Computersystem verkörpert, insbesondere ein Computerprogrammprodukt mit einem computerlesbaren Medium, welches die Computerprogrammcodemittel enthält.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein Computersystem darstellt, das mit einer Datenlieferungseinheit und über ein Telekommunikationsnetz mit Kommunikationsendgeräten verbunden ist.
Figur 2a zeigt ein Flussdiagramm, das schematisch einen möglichen Datenaustausch bei der Übermittlung kontextspezifischer Daten von der Datenlieferungseinheit an ein mobiles Kommunikationsendgerät darstellt.
Figur 2b zeigt ein Flussdiagramm, das schematisch einen möglichen Datenaustausch bei der Übermittlung der kontextspezifischen Daten von der Datenlieferungseinheit an ein Kommunikationsendgerät darstellt.
Figur 3a zeigt ein Flussdiagramm, das schematisch einen weiteren möglichen Datenaustausch bei der Übermittlung kontextspezifischer Daten von der Datenlieferungseinheit an ein mobiles Kommunikationsendgerät darstellt.
Figur 3b zeigt ein Flussdiagramm, das schematisch einen weiteren möglichen Datenaustausch bei der Übermittlung der kontextspezifischen Daten von der Datenlieferungseinheit an ein Kommunikationsendgerät darstellt.
Figur 4 zeigt eine Übersicht, die den Zusammenhang zwischen kontextspezifischen Daten, kontextdefinierenden Bedingungen und Attributdaten darstellt.

### Wege zur Ausführung der Erfindung

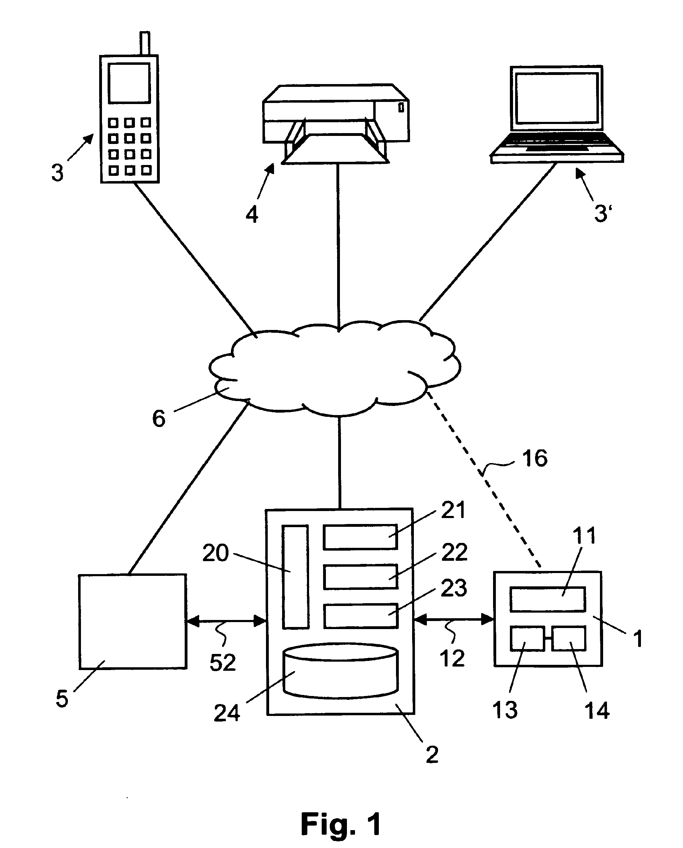

In der Figur 1 bezeichnet das Bezugszeichen 6 ein Telekommunikationsnetz, das insbesondere ein Mobilfunknetz umfasst. Das Mobilfunknetz ist beispielsweise ein GSM- (Global System for Mobile Communication), ein UMTS-Netz (Universal Mobile Telephone System) oder ein anderes, beispielsweise satellitenbasiertes Mobilfunknetz, oder ein WLAN (Wireless Local Area Network). In einer Ausführungsvariante umfasst das Telekommunikationsnetz 6 auch ein Festnetz, beispielsweise das öffentliche geschaltete Telefonnetz, ein ISDN-Netz (Integrated Services Digital Network), digitale Teilnehmerleitungen (DSL, Digital Subscriber Line), Ad-Hoc Netze, Multi-Hop Netze, Peer-to-Peer-Netze, hybride Netze und/oder vorzugsweise das Internet oder ein Intranet.

In den Figuren 1, 2a, 2b, 3a, 3b bezeichnen die Bezugszeichen 3, 3' mobile Kommunikationsendgeräte, die für die Kommunikation über das oben erwähnte Mobilfunknetz eingerichtet sind, beispielsweise ein Mobilfunktelefon oder PDA-Computer (Personal Digital Assistant) oder ein mobiler Notebook oder Laptop-Computer.

In den Figuren 1, 2a, 2b, 3a, 3b bezeichnet das Bezugszeichen 4 eine computerisierte Vorrichtung, beispielsweise ein Drucker, ein Scanner, ein Zahlungsterminal, ein Ticketterminal, eine Zugangskontrollvorrichtung, oder ein gewöhnlicher Computer. Die Vorrichtung 4 ist typischerweise mit funktionsspezifischen Softwareapplikationen ausgestattet und verfügt über ein Kommunikationsmodul für die Datenkommunikation über das Telekommunikationsnetz 6.

In der Figur 1 bezeichnet das Bezugszeichen 5 eine Netzwerkeinheit des Telekommunikationsnetzes 6, insbesondere eine Netzwerkeinheit 5 des Mobilfunknetzes, in welcher teilnehmerspezifische respektive endgerätespezifische Attributdaten von Teilnehmern respektive mobilen Kommunikationsendgeräten 3, 3' des Mobilfunknetzes gespeichert sind. Die Netzwerkeinheit 5 ist vorzugsweise Teil der Netzinfrastruktur des Mobilfunknetzes und wird vom Betreiber des Mobilfunknetzes betrieben. Die Netzwerkeinheit 5 umfasst beispielsweise ein so genanntes Home Location Register (HLR) oder Home Subscriber System (HSS), das heisst eine Heimteilnehmerdatenbank, einen so genannten Home Agent (HA) für Mobile IP (MIP), und/oder ein so genanntes Visitor Location Register (VLR), das heisst eine Besucherdatenbank.

In den Figuren 1, 2a, 2b, 3a, 3b bezeichnet das Bezugszeichen 2 ein Computersystem, das über ein Kommunikationsmodul 20 für den Datenaustausch über das Telekommunikationsnetz 6 verfügt. Das Computersystem 2 ist vorzugsweise als Server ausgeführt. Vorzugsweise ist das Computersystem 2 über eine Kommunikationsverbindung 52 mit der Netzwerkeinheit 5 verbunden und wird vom Betreiber des Mobilfunknetzes oder von einer anderen so genannten Trusted Third Party (TTP) betrieben, beispielsweise eine Certificate Authority, eine Regierung oder ein Unternehmen. Das Kommunikationsmodul 20 ist auch eingerichtet, über die Kommunikationsverbindung 52 auf Daten in der Netzwerkeinheit 5 zuzugreifen. Das Computersystem 2 umfasst einen oder mehrere Computer mit jeweils einem oder mehreren Prozessoren. Zur Steuerung der Prozessoren umfasst das Computersystem 2 zudem verschiedene funktionale Module, insbesondere ein Empfangsmodul 21, ein Kontextprüfungsmodul 22 und ein Datenübermittlungsmodul 23. Die funktionalen Module sind vorzugsweise als programmierte Softwaremodule ausgeführt. Der Computerprogrammcode der Softwaremodule ist Teil eines Computerprogrammprodukts und ist vorzugsweise in einem Computer des Computersystems 2 gespeichert, auf einem computerlesbaren Datenträger, der fest oder entfernbar mit dem Computer verbunden ist. Der Fachmann wird verstehen, das die funktionalen Module teilweise oder vollständig auch hardwaremässig ausgeführt werden können. Das Computersystem 2 umfasst überdies einen Datenspeicher 24 zur Speicherung von Bedingungsdaten und zugeordneten kontextspezifischen Datenelementen, wie später detaillierter beschrieben wird. Das Kommunikationsmodul 20 ist auch eingerichtet über eine Kommunikationsverbindung 12 mit der Datenlieferungseinheit 1 zu kommunizieren.

Die Datenlieferungseinheit 1 ist vorzugsweise als computerisierte Vorrichtung ausgestaltet und auf einem vom Computersystem 2 separaten Computer implementiert, wobei die Kommunikationsverbindung 12 entsprechend als feste Kommunikationsverbindung ausgeführt ist. Wie durch die gestrichelte Line 16 angedeutet ist, umfasst die Datenlieferungseinheit 1 in einer Ausführungsvariante auch ein Kommunikationsmodul für die Kommunikation über das Telekommunikationsnetz 6. Die Datenlieferungseinheit 1 ist in einer Variante als (mobiles oder fest installiertes) Kommunikationsendgerät ausgeführt, welches eingerichtet ist mit dem Computersystem 2 über das Telekommunikationsnetz 6 zu kommunizieren. Der Fachmann wird jedoch verstehen, dass die Datenlieferungseinheit 1 auch als programmiertes Softwaremodul auf einem Computer des Computersystems 2 ausgeführt sein kann, wobei die Kommunikationsverbindung 12 entsprechend als Softwareschnittstelle ausgeführt wird. Die Datenlieferungseinheit 1 umfasst ein als programmiertes Softwaremodul ausgeführtes Steuermodul 11 sowie gespeicherte Bedingungsdaten 13 und zugeordnete kontextspezifische Datenelemente 14. Die Datenlieferungseinheit 1 kann auch auf mehrere Computer verteilt ausgeführt sein, wobei insbesondere die Bedingungsdaten 13 und die zugeordneten kontextspezifischen Datenelemente 14 auf verschiedenen Einheiten gespeichert sind und von diesen verschiedenen Einheiten aus übermittelt werden.

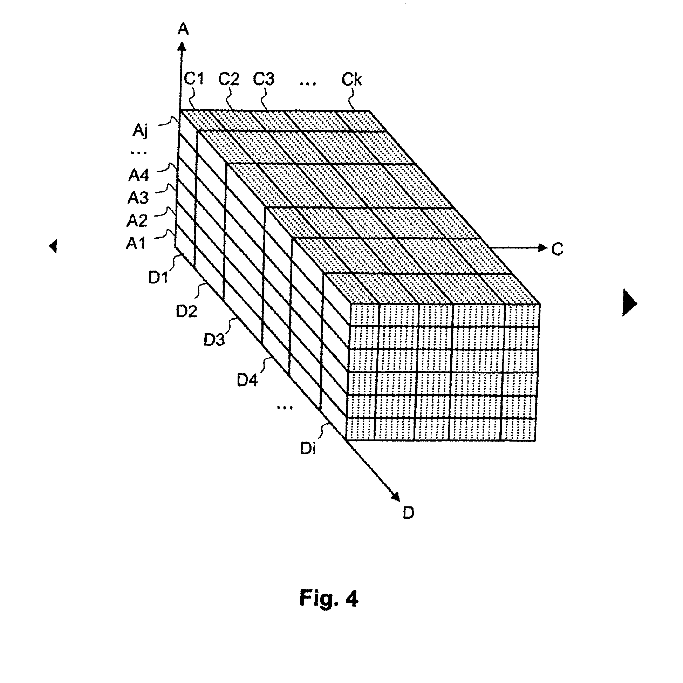

Die Bedingungsdaten 13 definieren Bedingungen (oder Kriterien) an aktuelle Attribute von Kommunikationsendgeräten respektive Kommunikationsteilnehmern des Telekommunikationsnetzes 6, insbesondere des oben angeführten Mobilfunknetzes. Eine oder eine Kombination von mehreren der durch die Bedingungsdaten 13 definierten Bedingungen sind einem oder mehreren der kontextspezifischen Datenelemente 14 zugeordnet. Die Bedingungen definieren einen bestimmten Kontext für die zugeordneten kontextspezifischen Datenelemente 14. Die kontextspezifischen Datenelemente 14 werden dann und nur dann ausgeliefert, wenn die zugeordnete(n) Bedingung(en) gleichzeitig erfüllt sind, das heisst der betreffende Kontext gegeben ist. In der Figur 4 ist der Zusammenhang zwischen kontextdefinierenden Bedingungen auf der Achse C, Attributen auf der Achse A und kontextspezifischen Datenelementen auf der Achse D schematisch dargestellt. Eines oder eine Kombination von mehreren der Bedingungsdatenelemente definiert eine Bedingung C1, C2, C3, ..., Ck an die Werte von einem oder mehreren Attributen A1, A2, A3, A4, ..., Aj. Jedem der Bedingungen C1, C2, C3, ..., Ck sind jeweils eines oder mehrere Datenelemente D1, D2, D3, D4, ..., Di zugeordnet. Die Bedingungen C1, C2, C3, ..., Ck definieren für Attribute A1, A2, A3, A4, ..., Aj bestimmte Werte, Mindestwerte oder Wertebereiche, oder definieren ein bestimmtes gegenseitiges Werteverhältnis für mehrere Attribute A1, A2, A3, A4, ..., Aj untereinander. Ortsbedingungen setzen beispielsweise voraus, dass der Teilnehmer respektive das mobile Kommunikationsendgerät 3, 3' sich an einer bestimmten geografischen Position oder in einem bestimmten Gebiet aufhält. Netzwerkbedingungen bedingen beispielsweise, dass das mobile Kommunikationsendgerät 3, 3' in einem bestimmten Netzwerk eingebucht ist, einen bestimmten Zugriffspunkt oder Netzwerkadresse verwendet, oder ein bestimmtes Kommunikationsprotokoll oder eine definierte Mindestbandbreite benützt. Zeitbedingungen definieren einen bestimmten Zeitbereich oder Zeitpunkt als Voraussetzung. Gerätebedingungen setzen eine bestimmte oder zumindest minimale Gerätespezifikation und/oder Gerätekonfiguration voraus, beispielsweise eine Mindestauflösung einer Anzeige, eine Mindestgrösse von verfügbarem Speicherplatz, aktuelle Virenscanner, Firewalls, etc. Mit den Bedingungsdaten kann auch die Bedingung definiert werden, dass sich das mobile Kommunikationsendgerät 3, 3' authentifiziert hat und autorisiert ist, d.h. dass ein diesbezüglicher Prozess ausgeführt wurde.

Die Attribute A1, A2, A3, A4, ..., Aj umfassen beispielsweise die aktuelle geografische Position eines Teilnehmers respektive seines mobilen Kommunikationsendgeräts 3, 3', der momentan vom mobilen Kommunikationsendgerät 3, 3' verwendete Netzwerkzugriffspunkt auf ein WLAN, die Netzwerkidentifizierung und/oder der Netzwerktyp des Netzwerks, in welchem sich das mobile Kommunikationsendgerät 3, 3' gerade befindet, die aktuelle Netzwerkadresse (MAC, IP) oder Care of Adresse (z.B. in Mobile IP, MIP), die dem mobilen Kommunikationsendgerät 3, 3' momentan zugeteilt ist, eine vom mobilen Kommunikationsendgerät 3, 3' momentan verwendetes Protokoll, z.B. GPRS (General Paket Radio Service) oder UMTS (Universal Mobile Telecommunications System), die Teilnehmeridentifizierung des Teilnehmers, ein im mobilen Kommunikationsendgerät 3, 3' gespeichertes Zertifikat oder verbundenes Teilnehmeridentifizierungsmodul (z.B. SIM, Subscriber Identification Module; USIM, SIM für UMTS; oder IISIM, IP Multimedia Service Identity Module (ISIM)), das beispielsweise als Chipkarte (Smartcard) ausgeführt ist, ein vom Teilnehmer oder vom mobilen Kommunikationsendgerät 3, 3' geliefertes Passwort, der Gerätetyp, die Gerätekonfiguration des mobilen Kommunikationsendgeräts 3, 3', z.B. Anzeigeauflösung und/oder Anzeigegrösse, Dienstabonnemente und Berechtigungen des Teilnehmer und/oder Angaben über den aktuellen Zeitpunkt (Uhrzeit, Datum).

Die kontextspezifischen Datenelemente D1, D2, D3, D4, ..., Di umfassen vorzugsweise Betriebsparameter für das mobile Kommunikationsendgerät 3, 3' respektive die Vorrichtung 4. Die in den kontextspezifischen Datenelementen D1, D2, D3, D4, ..., Di enthaltenen Betriebsparameter für das mobile Kommunikationsendgerät 3, 3' respektive die Vorrichtung 4 umfassen vorzugsweise kommunikationstechnische Parameter- und Datenwerte für die verschiedenen im ISO/OSI Referenzmodell (International Standards Organisation, Open System Interconnection) definierten Schichten eins bis sieben einschliesslich applikationsspezifischer Werte. Datenelemente für die Schicht Eins (physikalische Schicht) umfassen beispielsweise Parameter für die Konfiguration der Funkschnittstelle, Modulationsart und Trägerfrequenz (z.B. für SDR, Software Defined Radios). Datenelemente für die Schicht Zwei (Sicherungsschicht) umfassen beispielsweise WEP-Schlüssel (Wired Equivalent Privacy) oder andere kryptografischen Sicherheits- und Authentifizierungsschlüssel für die Schicht Zwei, FEC-Codes (Forward Error Correction) oder SSIDs (Service Set Identifier). Datenelemente für die Schicht Drei (Netzwerkschicht) umfassen beispielsweise IP-Adressen (Internet Protocol), Netzwerkmasken, so genannte Sicherheits-Credentials (z.B. Passwort oder X.509-Zertifikate) z.B. für IPsec (IP Security), Gateway-Adressen, oder Angaben über benachbarte mobile Kommunikationsendgeräte, zu welchen eine direkte P2P-Verbindung (Punkt zu Punkt) ohne Benutzung der Netzinfrastruktur aufgebaut werden kann. Datenelemente für die Schichten Vier bis Sieben (Transport-, Sitzungs-, Darstellungs- und Anwendungsschicht) umfassen beispielsweise Codecs (Coder/Decoder) für Multimediainformationen, weitere Sicherheits-Credentials z.B. für SSL (Secure Sockets Layer) oder Zertifikate, Konfigurationen für Firewalls, Einstellungsparameter für periphere Vorrichtungen 4 z.B. Druckereinstellungen, oder Berechtigungen wie z.B. ein Berechtigungsticket eine definierte Anzahl Seiten auf einem Drucker zu drucken. Die kontextspezifischen Datenelemente D1, D2, D3, D4, ..., Di umfassen auch Benutzerinformationen wie Telefonnummern, ortspezifische Angaben, Wegleitungsinformationen oder andere elektronische Nachrichten. Die kontextspezifischen Datenelemente D1, D2, D3, D4, ..., Di umfassen in einer Variante auch Softwareelemente für Softwareapplikationen des mobilen Kommunikationsendgeräts 3, 3' respektive der Vorrichtung 4, beispielsweise so genannte applikationsspezifische Plugins.

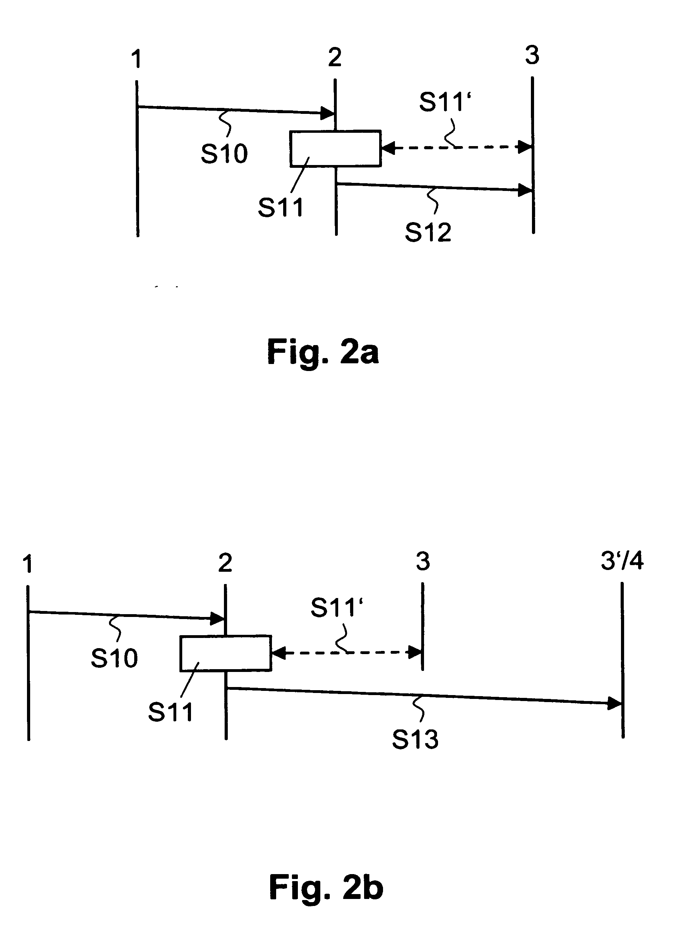

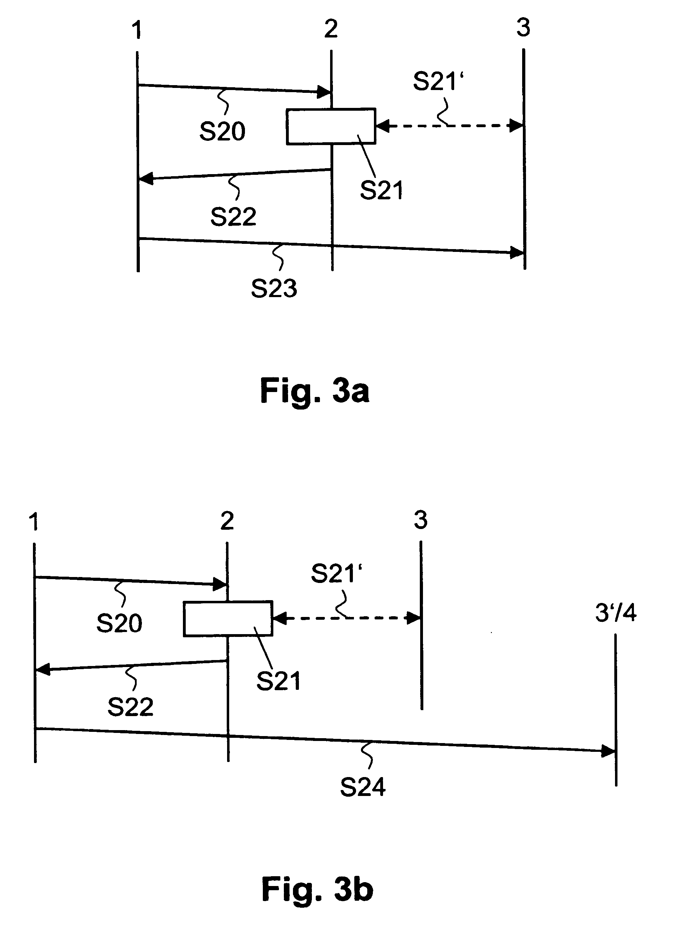

In den folgenden Abschnitten werden mit Bezug zu den Figuren 2a, 2b, 3a und 3b verschiedene Beispiele des Verfahrensablaufs und Datenaustauschs für die Übermittlung kontextspezifischer Daten von der Datenlieferungseinheit 1 an ein Kommunikationsendgerät beschrieben.

Wie in den Figuren 2a und 2b dargestellt ist, übermittelt die Datenlieferungseinheit 1 im Schritt S10 Bedingungsdaten und zugeordnete kontextspezifische Datenelemente über die Kommunikationsverbindung 12 an das Computersystem 2. Die Bedingungsdaten und zugeordneten Datenelemente werden im Computersystem 2 vom Empfangsmodul 21 entgegengenommen und im Datenspeicher 24 abgespeichert. Typischerweise sind die Bedingungsdaten teilnehmerspezifisch oder gruppenspezifisch, die Bedingungsdaten können jedoch auch allgemein für sämtliche Teilnehmer respektive mobilen Kommunikationsendgeräte 3, 3' im betreffenden Mobilfunknetz gültig und anwendbar sein. Zusammen mit den Bedingungsdaten und kontextspezifische Datenelementen können im Schritt S10 auch zugeordnete Anweisungen von der Datenlieferungseinheit 1 an das Computersystem 2 übermittelt werden. Die Anweisungen und diesbezügliche Anweisungsparameter werden durch das Empfangsmodul 21 entgegengenommen und im Datenspeicher 24 den Bedingungsdaten und/oder den kontextspezifischen Datenelementen zugeordnet abgespeichert. Beispiele von Anweisungen werden in nachfolgenden Absätzen angeführt.

Im Schritt S11, überprüft das Kontextprüfungsmodul 22, ob das mobile Kommunikationsendgerät 3 eine oder mehrere für das mobile Kommunikationsendgerät 3 relevante Bedingungen erfüllt, die durch die Bedingungsdaten definiert werden. Das Kontextprüfungsmodul 22 führt diese Kontextprüfung periodisch oder beim Eintreffen gewisser, für das mobile Kommunikationsendgerät 3 relevanten Ereignisse durch. Die relevanten Ereignisse umfassen beispielsweise den Empfang einer vom mobilen Kommunikationsendgerät 3 übermittelten oder initiierten Nachricht, zum Beispiel eine so genannte Location Update Nachricht vom mobilen Kommunikationsendgerät 3 im HLR, einen so genannten Binding Update (BU) beim Home Agent (HA) bei der Verwendung von Mobile IP, oder eine so genannte UPDATE_SA_ADDRESSES Meldung im Internet Key Exchange Protokoll (IKEv2). Die Nachricht kann auch von einer Netzwerkeinheit 5 des Telekommunikationsnetzes 6 oder vom Computersystem 2 übermittelt respektive initiiert werden. Die Kontextprüfung umfasst den Zugriff auf die Netzwerkeinheit 5, wenn die Bedingungsdaten Attribute betreffen, die dort als teilnehmerspezifische Daten gespeichert sind. Wie im Schritt S11' angedeutet ist, kann die Kontextprüfung auch Datenanfragen an das mobile Kommunikationsendgerät 3 beinhalten, wenn die aktuellen zu überprüfenden Attribute nicht in der Netzwerkeinheit 5 verfügbar sind. Wenn mindestens eine Bedingung mit zugeordneten zu übertragenden kontextspezifischen Datenelementen erfüllt ist, fährt das Computersystem 2 gemäss der in der Figur 2a dargestellten Variante im Schritt S12 und gemäss der in der Figur 2b dargestellten Variante im Schritt S13 weiter. Ansonsten, wenn keine Bedingung erfüllt ist, wartet das Kontextprüfungsmodul 22 die nächste Überprüfungsperiode oder das nächste prüfungsauslösende Ereignis ab.

Im Schritt S12 (Figur 2a) übermittelt das Datenübermittlungsmodul 23 die kontextspezifischen Datenelemente, die den im Schritt S11 bestimmten erfüllten Bedingungen zugeordnet sind, über das Mobilfunknetz an das mobile Kommunikationsendgerät 3, von welchem die Bedingungen erfüllt wurden.

Im Schritt S13 (Figur 2b) übermittelt das Datenübermittlungsmodul 23 die kontextspezifischen Datenelemente, die den im Schritt S11 bestimmten erfüllten Bedingungen zugeordnet sind, über das Mobilfunknetz nicht an das mobile Kommunikationsendgerät 3, von welchem die Bedingungen erfüllt wurden, sondern an das mobile Kommunikationsendgerät 3' oder an die Vorrichtung 4, welche in einer den betreffenden Bedingungen und/oder kontextspezifischen Datenelementen zugeordnet gespeicherten Anweisung als Empfänger spezifiziert wurden.

Es sind auch Anweisungen vorgesehen um die kontextspezifischen Datenelemente an mehrere spezifizierte Empfänger auszuliefern, beispielsweise an das mobile Kommunikationsendgerät 3, von welchem die Bedingungen erfüllt wurden, und an das mobile Kommunikationsendgerät 3' und/oder die Vorrichtung 4. Entsprechend solcher Anweisungen werden folglich sowohl der Schritt S12 als auch der Schritt S13 ausgeführt. Die Anweisungen können auch so ausgestaltet werden, dass verschiedene der kontextspezifischen Datenelemente an verschiedene Empfänger ausgeliefert werden. Zum Beispiel wird im Schritt S12 ein erster kryptografischer Schlüssel eines Schlüsselpaars an das mobile Kommunikationsendgerät 3 übermittelt, von welchem die Bedingungen erfüllt wurden, und im Schritt S13 wird der zweite Schlüssel zusammen mit weiteren kontextspezifischen Datenelemente an die Vorrichtung 4 übermittelt, beispielsweise Druckereinstellungsparameter für einen Drucker. Anhand des Schlüsselpaars wird anschliessend die Berechtigung des mobilen Kommunikationsendgeräts 3 für den Zugriff auf den Drucker überprüft und ein Druckauftrag des mobilen Kommunikationsendgeräts 3 vom Drucker mit den empfangenen Druckereinstellungsparametern ausgeführt.

Wie in den Figuren 3a und 3b dargestellt ist, übermittelt die Datenlieferungseinheit 1 im Schritt S20 Bedingungsdaten (ohne zugeordnete kontextspezifische Datenelemente) über die Kommunikationsverbindung 12 an das Computersystem 2. Zusammen mit den Bedingungsdaten werden auch Zuordnungsangaben übermittelt, welche ausreichen, den Bedingungsdaten kontextspezifische Datenelemente zuzuordnen. Je nach Ausführung umfassen die Zuordnungsangaben eine Identifizierung der betreffenden kontextspezifischen Datenelemente oder eine Identifizierung der Bedingungsdaten. Die Bedingungsdaten und Zuordnungsdaten werden im Computersystem 2 vom Empfangsmodul 21 entgegengenommen und im Datenspeicher 24 abgespeichert. Wie im Zusammenhang mit Schritt S10 bereits angeführt wurde können zusammen mit den Bedingungsdaten auch zugeordnete Anweisungen von der Datenlieferungseinheit 1 an das Computersystem 2 übermittelt und durch das Empfangsmodul 21 entgegengenommen und im Datenspeicher 24 den Bedingungsdaten zugeordnet abgespeichert werden.

Im Schritt S21, überprüft das Kontextprüfungsmodul 22, wie oben im Zusammenhang mit Schritt S11 beschrieben, ob das mobile Kommunikationsendgerät 3 eine oder mehrere für das mobile Kommunikationsendgerät 3 relevante Bedingungen erfüllt, die durch die Bedingungsdaten definiert werden. Wie oben im Zusammenhang mit Schritt S11' erwähnt wurde, werden im Schritt S21' gegebenenfalls Datenanfragen an das mobile Kommunikationsendgerät 3 durchgeführt. Wenn mindestens eine Bedingung mit zugeordneten zu übertragenden kontextspezifischen Datenelementen erfüllt ist, fährt das Computersystem 2 im Schritt S22 weiter. Ansonsten, wenn keine Bedingung erfüllt ist, wartet das Kontextprüfungsmodul 22 die nächste Überprüfungsperiode oder das nächste prüfungsauslösende Ereignis ab.

Im Schritt S22, löst das Datenübermittlungsmodul 23 die Übermittlung der kontextspezifischen Datenelemente aus, die den im Schritt S21 bestimmten erfüllten Bedingungen zugeordnet sind. Die Übermittlung wird dadurch ausgelöst, dass das Datenübermittlungsmodul 23 eine Freigabeinstruktion an die Datenlieferungseinheit 1 übermittelt. Die Freigabeinstruktion umfasst die Zuordnungsdaten zur Bestimmung der zu übermittelnden kontextspezifischen Datenelemente. Je nach Variante fährt das Steuermodul 11 der Datenlieferungseinheit 1 im Schritt S23 (Figur 3a) oder im Schritt S24 (Figur 3b) weiter.

Gemäss der in der Figur 3a dargestellten Variante, übermittelt das Steuermodul 11 der Datenlieferungseinheit 1 im Schritt S23 die durch die Zuordnungsdaten bestimmten kontextspezifischen Datenelemente an das mobile Kommunikationsendgerät 3, von welchem die Bedingungen erfüllt wurden. Die Übermittlung erfolgt entweder direkt von der Datenlieferungseinheit 1 über das Mobilfunknetz an das mobile Kommunikationsendgerät 3 oder indirekt über das Computersystem 2, indem die kontextspezifischen Datenelemente von der Datenlieferungseinheit 1 zur Weiterleitung an das Computersystem 2 übermittelt werden.

Gemäss der in der Figur 3b dargestellten Variante, übermittelt das Steuermodul 11 der Datenlieferungseinheit 1 im Schritt S24 die durch die Zuordnungsdaten bestimmten kontextspezifischen Datenelemente nicht an das mobile Kommunikationsendgerät 3, von welchem die Bedingungen erfüllt wurden, sondern an das mobile Kommunikationsendgerät 3' oder an die Vorrichtung 4, welche in einer den betreffenden Bedingungen und/oder kontextspezifischen Datenelementen zugeordnet gespeicherten Anweisung als Empfänger spezifiziert wurden. Die Übermittlung erfolgt wiederum entweder direkt von der Datenlieferungseinheit 1 über das Mobilfunknetz an das mobile Kommunikationsendgerät 3 oder indirekt über das Computersystem 2, indem die kontextspezifischen Datenelemente von der Datenlieferungseinheit 1 zur Weiterleitung an das Computersystem 2 übermittelt werden.

In einer Variante ist die Übermittlung von Bedingungsdaten und Datenelementen durch die Datenlieferungseinheit 1 (beispielsweise an das Computersystem 2) an gewisse Kriterien an die Datenlieferungseinheit 1 gebunden, beispielsweise muss die Datenlieferungseinheit 1 vorerst authentifiziert und autorisiert sein.

Wie oben im Zusammenhang mit den Schritten S12 und S13 bereits angeführt wurde besteht auch die Möglichkeit, die Anweisungen so vorzusehen, dass die kontextspezifischen Datenelemente an mehrere spezifizierte Empfänger ausgeliefert werden, so dass sowohl der Schritt S23 als auch der Schritt S24 ausgeführt werden. Überdies ist es möglich, dass Anweisungen so vorgesehen sind, dass wenn ein oder mehrere Kommunikationsendgeräte und/oder Netzwerkeinheiten (z.B. das mobile Kommunikationsendgerät 3 und/oder die Netzwerkeinheit 5) die Bedingungen erfüllen, die kontextspezifischen Datenelemente an einen oder mehrere spezifizierte Empfänger ausgeliefert werden (z.B. an das mobile Kommunikationsendgerät 3', an die Vorrichtung 4, an mehrere mobile Kommunikationsendgeräte 3', an mehrere Vorrichtungen 4, oder an mehrere mobile Kommunikationsendgeräte 3' und mehrere Vorrichtungen 4).

Die Anweisungen sind auch so definierbar, dass zugeordnete Datenelemente, die bereits ausgeliefert wurden zu einem späteren Zeitpunkt beim Empfänger gelöscht oder verändert werden. Der spätere Zeitpunkt ist beispielsweise durch einen fest definierten Zeitpunkt oder eine definierte Zeitdauer festgelegt, oder kann wiederum an bestimmte, durch Bedingungsdaten definierte Bedingungen gebunden sein. Dadurch ist es beispielsweise möglich Berechtigungen und/oder Schlüssel zeitlich zu beschränken oder Parameterwerte zu aktualisieren.

Es ist auch möglich Anweisungen vorzusehen, die die Korrektur von Datenelementen in der Datenlieferungseinheit 1 oder im Computersystem 2 zulassen, wenn ein Empfänger, z.B. ein Drucker, feststellt, dass das übermittelte Datenelement, z.B. ein Druckerparameter, falsch ist. Beispielsweise lässt eine solche Anweisung eine Korrekturinstruktion vom Empfänger für ein vorher an diesen Empfänger ausgeliefertes Datenelement zu und korrigiert das entsprechende Datenelement mit einem empfangenen Korrekturwert.

An dieser Stelle zudem festgehalten werden, dass die kontextspezifischen Datenelemente, die wie oben beschrieben an einen oder mehrere Empfänger übermittelt werden, auch bloss Berechtigungen oder Zugriffsschlüssel umfassen können, welche dem bereffenden Empfänger ermöglichen berechtigungskontrollierte und/oder verschlüsselte Daten zu verwenden, die dem Empfänger schon vor der Bedingungsüberprüfung übermittelt wurden. Auf diese Weise ist es beispielsweise möglich, dass die Datenlieferungseinheit 1 beispielsweise verschlüsselte Videodaten über eine langsame GPRS-Verbindung an den/die Empfänger übermittelt, und den zugeordneten Schlüssel, jedoch erst nach Erfüllung einer Zahlungsbedingung an den Empfänger übermittelt.

Abschliessend soll festgehalten werden, dass sich das vorgeschlagene Computersystem und Verfahren nicht nur für die Übermittlung von kontextspezifischen Daten über ein Mobilfunknetz an mobile Kommunikationsendgeräte 3, 3' eignet, sondern dass die kontextspezifischen Daten auch auf andere Netzwerkeinheiten insbesondere fest installierte Netzwerkeinheiten übermittelt werden können, beispielsweise abhängig von Bedingungen, die durch diese anderen Netzwerkeinheiten erfüllt werden. Beispiele solcher Netzwerkeinheiten umfassen elektronische Endgeräte, die mit dem Computersystem 2 z.B. über das Telekommunikationsnetz 6 verbindbar sind, beispielsweise andere Kommunikationsendgeräte, Server, Router, Basisstationen, Zugriffspunkte (Access Points) etc. Das Computersystem 2 ist dann eingerichtet zur Übermittlung von kontextspezifischen Daten über das Telekommunikationsnetz 6 an eine erste der Netzwerkeinheiten und umfasst ein Empfangsmodul 21 zum Entgegennehmen und Speichern der Bedingungsdaten, die Datenelementen von der Datenlieferungseinheit 1 zugeordnet sind, ein Kontextprüfungsmodul 22 zum Überprüfen, ob eine zweite der Netzwerkeinheiten eine oder mehrere Bedingungen erfüllt, die durch die Bedingungsdaten definiert werden, und ein Datenübermittlungsmodul 23 zum Auslösen der Übermittlung von kontextspezifischen Datenelementen, die Bedingungsdaten zugeordnet sind, welche Bedingungsdaten eine von der zweiten Netzwerkeinheit erfüllte Bedingung definieren, über das Telekommunikationsnetz 6 an die erste Netzwerkeinheit, wobei die erste Netzwerkeinheit eine separate andere oder ein und dieselbe Netzwerkeinheit wie die zweite Netzwerkeinheit sein kann.

## Patentansprüche

1. Computersystem (2) zur Übermittlung von kontextspezifischen Daten über ein Mobilfunknetz an ein erstes mobiles Kommunikationsendgerät (3, 3'), umfassend:
ein Empfangsmodul (21) zum Entgegennehmen und Speichern von Bedingungsdaten, die Datenelementen von einer Datenlieferungseinheit (1) zugeordnet sind,
ein Kontextprüfungsmodul (22) zum Überprüfen, ob ein zum Computersystem (2) externes zweites mobiles Kommunikationsendgerät (3) eine oder mehrere Bedingungen erfüllt, die durch die Bedingungsdaten definiert werden, und
ein Datenübermittlungsmodul (23) zum Auslösen der Übermittlung von kontextspezifischen Datenelementen, die Bedingungsdaten zugeordnet sind, welche Bedingungsdaten eine vom zweiten mobilen Kommunikationsendgerät (3) erfüllte Bedingung definieren, über das Mobilfunknetz an das erste mobile Kommunikationsendgerät (3, 3').

2. Computersystem (2) nach Anspruch 1, **dadurch gekennzeichnet, dass** das Computersystem (2) eingerichtet ist, aktuelle dem zweiten mobilen Kommunikationsendgerät (3) zugeordnete Attributdaten von einer Netzwerkeinheit (5) des Mobilfunknetzes zu beziehen, und dass das Kontextprüfungsmodul (22) eingerichtet ist, basierend auf diesen aktuellen Attributdaten und diesbezüglichen Bedingungsdaten zu Überprüfen, ob das zweite mobile Kommunikationsendgerät (3) die Bedingung(en) erfüllt.

3. Computersystem (2) nach einem der Ansprüche 1 oder 2, **dadurch gekennzeichnet, dass** das Kontextprüfungsmodul (22) eingerichtet ist, basierend auf aktuellen dem zweiten mobilen Kommunikationsendgerät (3) zugeordneten Attributdaten und diesbezüglichen Bedingungsdaten zu Überprüfen, ob das zweite mobile Kommunikationsendgerät (3) die Bedingung(en) erfüllt, wobei diese aktuellen Attributdaten mindestens eine Angabe aus geografische Position, Netzwerkzugriffspunkt, Netzwerkidentifizierung, Netzwerkadresse, Netzwerktyp, Teilnehmeridentifizierung, Zertifikat, Passwort, Gerätetyp und Gerätekonfiguration umfassen.

4. Computersystem (2) nach einem der Ansprüche 1 bis 3, **dadurch gekennzeichnet, dass** das Empfangsmodul (21) eingerichtet ist zum Entgegennehmen eines Bedingungserfüllungsnachweises vom zweiten mobilen Kommunikationsendgerät (3), dass das Kontextprüfungsmodul (22) eingerichtet ist, zum Überprüfen des Bedingungserfüllungsnachweises und zum Bestimmen von Bedingungsdaten, die dem Bedingungserfüllungsnachweis zugeordnet sind, und dass Datenübermittlungsmodul (23) eingerichtet ist zum Auslösen der Übermittlung der kontextspezifischen Datenelemente, die den bestimmten Bedingungsdaten zugeordnet sind, über das Mobilfunknetz an das erste mobile Kommunikationsendgerät (3, 3').

5. Computersystem (2) nach einem der Ansprüche 1 bis 4, **dadurch gekennzeichnet, dass** das Empfangsmodul (21) eingerichtet ist, zum Entgegennehmen der den Bedingungsdaten zugeordneten Datenelemente von der Datenlieferungseinheit (1) und zum Speichern der Datenelemente zugeordnet zu den Bedingungsdaten, und dass das Datenübermittlungsmodul (23) eingerichtet ist, zum Übermitteln der kontextspezifischen Datenelemente an das erste mobile Kommunikationsendgerät (3, 3').

6. Computersystem (2) nach einem der Ansprüche 1 bis 5, **dadurch gekennzeichnet, dass** das Empfangsmodul (21) eingerichtet ist zum Entgegennehmen und Speichern von Zuordnungsangaben, welche die Bedingungsdaten den Datenelementen der Datenlieferungseinheit (1) zuordnen, und dass das Datenübermittlungsmodul (23) eingerichtet ist, die Übermittlung der kontextspezifischen Datenelemente durch Übermittlung einer Freigabeinstruktion an die Datenlieferungseinheit (1) auszulösen.

7. Computersystem (2) nach einem der Ansprüche 1 bis 6, **dadurch gekennzeichnet, dass** die Datenelemente mindestens ein Datenelement aus Betriebsparameter für das erste mobile Kommunikationsendgerät (3, 3'), elektronische Nachricht, elektronischer Datenwert und Softwareelement für eine Softwareapplikation umfassen.

8. Computersystem (2) nach einem der Ansprüche 1 bis 7, **dadurch gekennzeichnet, dass** das Empfangsmodul (21) eingerichtet ist zum Entgegennehmen und Speichern von Anweisungen, welche den Bedingungsdaten und/oder den kontextspezifischen Datenelementen zugeordnet sind, und dass das Datenübermittlungsmodul (23) eingerichtet ist, die Übermittlung der kontextspezifischen Datenelemente entsprechend den betreffenden Anweisungen auszulösen, wobei verschiedene der kontextspezifischen Datenelemente an das erste mobile Kommunikationsendgerät (3, 3') und/oder an eine andere Vorrichtung zu übermitteln sind.

9. Computersystem (2) nach einem der Ansprüche 1 bis 8, **dadurch gekennzeichnet, dass** das Kontextprüfungsmodul (22) eingerichtet ist, die durch die Bedingungsdaten definierte(n) Bedingung(en) periodisch oder auf Grund einer empfangenen Nachricht zu überprüfen.

10. Computersystem (2) nach einem der Ansprüche 1 bis 9, **dadurch gekennzeichnet, dass** das erste mobile Kommunikationsendgerät (3, 3') und das zweite mobile Kommunikationsendgerät (3) das selbe mobile Kommunikationsendgerät (3) sind.

11. Computersystem (2) nach einem der Ansprüche 1 bis 10, **dadurch gekennzeichnet, dass** die Datenlieferungseinheit (1) im Computersystem (2) angeordnet ist.

12. Verfahren zur Übermittlung von kontextspezifischen Daten über ein Mobilfunknetz an ein erstes mobiles Kommunikationsendgerät (3, 3'), umfassend:
Übermitteln (S10, S20) von Bedingungsdaten, die Datenelementen von einer Datenlieferungseinheit (1) zugeordnet sind, von der Datenlieferungseinheit (1) an ein Computersystem (2),
Entgegennehmen und Speichern der Bedingungsdaten im Computersystem (2),
Überprüfen (S11, S21) im Computersystem (2), ob ein zum Computersystem (2) externes zweites mobiles Kommunikationsendgerät (3) eine oder mehrere Bedingungen erfüllt, die durch die Bedingungsdaten definiert werden, und
durch das Computersystem (2) Auslösen (S22) der Übermittlung von kontextspezifischen Datenelementen, die Bedingungsdaten zugeordnet sind, welche Bedingungsdaten eine vom zweiten mobilen Kommunikationsendgerät (3) erfüllte Bedingung definieren, über das Mobilfunknetz an das erste mobile Kommunikationsendgerät (3, 3').

13. Verfahren nach Anspruch 12, **dadurch gekennzeichnet, dass** das Computersystem (2) aktuelle dem zweiten mobilen Kommunikationsendgerät (3) zugeordnete Attributdaten von einer Netzwerkeinheit (5) des Mobilfunknetzes bezieht, und dass das Computersystem (2) basierend auf diesen aktuellen Attributdaten und diesbezüglichen Bedingungsdaten überprüft (S11, S21), ob das zweite mobile Kommunikationsendgerät (3) die Bedingung(en) erfüllt.

14. Verfahren nach einem der Ansprüche 12 oder 13, **dadurch gekennzeichnet, dass** das Computersystem (2) basierend auf aktuellen dem zweiten mobilen Kommunikationsendgerät (3) zugeordneten Attributdaten und diesbezüglichen Bedingungsdaten überprüft (S11, S21), ob das zweite mobile Kommunikationsendgerät (3) die Bedingung(en) erfüllt, wobei diese aktuellen Attributdaten mindestens eine Angabe aus geografische Position, Netzwerkzugriffspunkt, Netzwerkidentifizierung, Netzwerkadresse, Netzwerktyp, Teilnehmeridentifizierung, Zertifikat, Passwort, Gerätetyp und Gerätekonfiguration umfassen.

15. Verfahren nach einem der Ansprüche 12 bis 14, **dadurch gekennzeichnet, dass** das zweite mobile Kommunikationsendgerät (3) einen Bedingungserfüllungsnachweis an das Computersystem (2) übermittelt (S20), dass das Computersystem (2) den Bedingungserfüllungsnachweis überprüft und Bedingungsdaten bestimmt, die dem Bedingungserfüllungsnachweis zugeordnet sind, und dass das Computersystem (2) die Übermittlung der kontextspezifischen Datenelemente, die den bestimmten Bedingungsdaten zugeordnet sind, über das Mobilfunknetz an das erste mobile Kommunikationsendgerät (3, 3') auslöst

16. Verfahren nach einem der Ansprüche 12 bis 15, **dadurch gekennzeichnet, dass** die Datenlieferungseinheit (1) die den Bedingungsdaten zugeordneten Datenelemente an das Computersystem (2) übermittelt (S10), dass das Computersystem (2) die Datenelemente entgegennimmt und den Bedingungsdaten zugeordnet speichert, und dass das Computersystem (2) die kontextspezifischen Datenelemente an das erste mobile Kommunikationsendgerät (3, 3') übermittelt (S12).

17. Verfahren nach einem der Ansprüche 12 bis 16, **dadurch gekennzeichnet, dass** die Datenlieferungseinheit (1) Zuordnungsangaben, welche die Bedingungsdaten den Datenelementen der Datenlieferungseinheit (1) zuordnen, an das Computersystem (2) übermittelt (S20), dass das Computersystem (2) die Zuordnungsangaben entgegennimmt und speichert, und dass das Computersystem (2) die Übermittlung der kontextspezifischen Datenelemente durch Übermittlung (S22) einer Freigabeinstruktion an die Datenlieferungseinheit (1) auslöst.

18. Verfahren nach einem der Ansprüche 12 bis 17, **dadurch gekennzeichnet, dass** die Datenelemente mindestens ein Datenelement aus Betriebsparameter für das erste mobile Kommunikationsendgerät (3, 3'), elektronische Nachricht, elektronischer Datenwert und Softwareelement für eine Softwareapplikation umfassen.

19. Verfahren nach einem der Ansprüche 12 bis 18, **dadurch gekennzeichnet, dass** die Übermittlung (S12, S13, S23, S24) der kontextspezifischen Datenelemente entsprechend Anweisungen ausgelöst wird, welche den Bedingungsdaten und/oder den kontextspezifischen Datenelementen zugeordnet sind, wobei verschiedene der kontextspezifischen Datenelemente an das erste mobile Kommunikationsendgerät (3, 3') und/oder an eine andere Vorrichtung zu übermitteln sind.

20. Verfahren nach einem der Ansprüche 12 bis 19, **dadurch gekennzeichnet, dass** das Computersystem (2) die durch die Bedingungsdaten definierte(n) Bedingung(en) periodisch oder auf Grund einer empfangenen Nachricht überprüft (S11, S21).

21. Verfahren nach einem der Ansprüche 12 bis 20, **dadurch gekennzeichnet, dass** das erste mobile Kommunikationsendgerät (3, 3') und das zweite mobile Kommunikationsendgerät (3) das selbe mobile Kommunikationsendgerät (3) sind.

22. Computerprogrammprodukt, umfassend Computerprogrammcodemittel zur Steuerung eines oder mehrerer Prozessoren eines Computers, derart, dass der Computer
Bedingungsdaten, die Datenelementen von einer Datenlieferungseinheit (1) zugeordnet sind, entgegennimmt und speichert,
überprüft, ob ein zum Computer externes zweites mobiles Kommunikationsendgerät (3) eine oder mehrere Bedingungen erfüllt, die durch die Bedingungsdaten definiert werden, und
die Übermittlung auslöst von kontextspezifischen Datenelementen, die Bedingungsdaten zugeordnet sind, welche Bedingungsdaten eine vom zweiten mobilen Kommunikationsendgerät (3) erfüllte Bedingung definieren, über ein Mobilfunknetz an das erste mobile Kommunikationsendgerät (3, 3').

## Claims

1. Computer system (2) for transmitting context-specific data to a first mobile communication terminal (3, 3') via a mobile radio network, comprising:
a receiving module (21) for receiving and storing conditional data assigned to data elements from a data delivery unit (1),
a context checking module (22) for checking whether a second mobile communication terminal (3) outside the computer system (2) complies with one or more conditions defined by the conditional data, and
a data transmitting module (23) for initiating the transmission of context-specific data elements assigned to conditional data, which define a condition complied with by the second mobile communication terminal (3), to the first mobile communication terminal (3, 3') via the mobile radio network.

2. Computer system (2) according to Claim 1, **characterized in that** the computer system (2) is set up to obtain current attribute data assigned to the second mobile communication terminal (3) from a network unit (5) of the mobile radio network, and **in that** the context checking module (22) is set up to check, on the basis of these current attribute data and relevant conditional data, whether the second mobile communication terminal (3) complies with the condition(s).

3. Computer system (2) according to either of Claims 1 and 2, **characterized in that** the context checking module (22) is set up to check, on the basis of current attribute data assigned to the second mobile communication terminal (3) and relevant conditional data, whether the second mobile communication terminal (3) complies with the condition(s), these current attribute data comprising at least one item of information selected from geographical position, network access point, network identification, network address, network type, subscriber identification, certificate, password, device type and device configuration.

4. Computer system (2) according to one of Claims 1 to 3, **characterized in that** the receiving module (21) is set up to receive proof of condition compliance from the second mobile communication terminal (3), **in that** the context checking module (22) is set up to check the proof of condition compliance and to determine conditional data assigned to the proof of condition compliance, and **in that** the data transmitting module (23) is set up to initiate the transmission of the context-specific data elements assigned to the determined conditional data to the first mobile communication terminal (3, 3') via the mobile radio network.

5. Computer system (2) according to one of Claims 1 to 4, **characterized in that** the receiving module (21) is set up to receive the data elements assigned to the conditional data from the data delivery unit (1) and to store the data elements in a manner assigned to the conditional data, and **in that** the data transmitting module (23) is set up to transmit the context-specific data elements to the first mobile communication terminal (3, 3').

6. Computer system (2) according to one of Claims 1 to 5, **characterized in that** the receiving module (21) is set up to receive and store assignment information items which assign the conditional data to the data elements from the data delivery unit (1), and **in that** the data transmitting module (23) is set up to initiate the transmission of the context-specific data elements by transmitting an enable instruction to the data delivery unit (1).

7. Computer system (2) according to one of Claims 1 to 6, **characterized in that** the data elements comprise at least one data element selected from operating parameter for the first mobile communication terminal (3, 3'), electronic message, electronic data value and software element for a software application.

8. Computer system (2) according to one of Claims 1 to 7, **characterized in that** the receiving module (21) is set up to receive and store instructions assigned to the conditional data and/or to the context-specific data elements, and **in that** the data transmitting module (23) is set up to initiate the transmission of the context-specific data elements in accordance with the relevant instructions, in which case various data elements of the context-specific data elements need to be transmitted to the first mobile communication terminal (3, 3') and/or to another apparatus.

9. Computer system (2) according to one of Claims 1 to 8, **characterized in that** the context checking module (22) is set up to check the condition(s) defined by the conditional data periodically or on the basis of a received message.

10. Computer system (2) according to one of Claims 1 to 9, **characterized in that** the first mobile communication terminal (3, 3') and the second mobile communication terminal (3) are the same mobile communication terminal (3).

11. Computer system (2) according to one of Claims 1 to 10, **characterized in that** the data delivery unit (1) is arranged in the computer system (2).

12. Method for transmitting context-specific data to a first mobile communication terminal (3, 3') via a mobile radio network, comprising:
transmitting (S10, S20) conditional data assigned to data elements from a data delivery unit (1) from the data delivery unit (1) to a computer system (2),
receiving and storing the conditional data in the computer system (2),
checking (S11, S21), in the computer system (2), whether a second mobile communication terminal (3) outside the computer system (2) complies with one or more conditions defined by the conditional data, and
initiating (S22), by means of the computer system (2), the transmission of context-specific data elements assigned to conditional data, which define a condition complied with by the second mobile communication terminal (3), to the first mobile communication terminal (3, 3') via the mobile radio network.

13. Method according to Claim 12, **characterized in that** the computer system (2) obtains current attribute data assigned to the second mobile communication terminal (3) from a network unit (5) of the mobile radio network, and **in that** the computer system (2) checks (S11, S21), on the basis of these current attribute data and relevant conditional data, whether the second mobile communication terminal (3) complies with the condition(s).

14. Method according to either of Claims 12 and 13, **characterized in that** the computer system (2) checks (S11, S21), on the basis of current attribute data assigned to the second mobile communication terminal (3) and relevant conditional data, whether the second mobile communication terminal (3) complies with the condition(s), these current attribute data comprising at least one item of information selected from geographical position, network access point, network identification, network address, network type, subscriber identification, certificate, password, device type and device configuration.

15. Method according to one of Claims 12 to 14, **characterized in that** the second mobile communication terminal (3) transmits (S20) proof of condition compliance to the computer system (2), **in that** the computer system (2) checks the proof of condition compliance and determines conditional data assigned to the proof of condition compliance, and **in that** the computer system (2) initiates the transmission of the context-specific data elements assigned to the determined conditional data to the first mobile communication terminal (3, 3') via the mobile radio network.

16. Method according to one of Claims 12 to 15, **characterized in that** the data delivery unit (1) transmits (S10) the data elements assigned to the conditional data to the computer system (2), **in that** the computer system (2) receives the data elements and stores them in a manner assigned to the conditional data, and **in that** the computer system (2) transmits (S12) the context-specific data elements to the first mobile communication terminal (3, 3').

17. Method according to one of Claims 12 to 16, **characterized in that** the data delivery unit (1) transmits (S20) assignment information items which assign the conditional data to the data elements from the data delivery unit (1) to the computer system (2), **in that** the computer system (2) receives and stores the assignment information items, and **in that** the computer system (2) initiates the transmission of the context-specific data elements by transmitting (S22) an enable instruction to the data delivery unit (1).

18. Method according to one of Claims 12 to 17, **characterized in that** the data elements comprise at least one data element selected from operating parameter for the first mobile communication terminal (3, 3'), electronic message, electronic data value and software element for a software application.

19. Method according to one of Claims 12 to 18, **characterized in that** the transmission (S12, S13, S23, S24) of the context-specific data elements is initiated in accordance with instructions assigned to the conditional data and/or to the context-specific data elements, in which case various data elements of the context-specific data elements need to be transmitted to the first mobile communication terminal (3, 3') and/or to another apparatus.

20. Method according to one of Claims 12 to 19, **characterized in that** the computer system (2) checks (S11, S21) the condition(s) defined by the conditional data periodically or on the basis of a received message.

21. Method according to one of Claims 12 to 20, **characterized in that** the first mobile communication terminal (3, 3') and the second mobile communication terminal (3) are the same mobile communication terminal (3).

22. Computer program product comprising computer program code means for controlling one or more processors of a computer in such a manner that the computer
receives and stores conditional data assigned to data elements from a data delivery unit (1),
checks whether a second mobile communication terminal (3) outside the computer complies with one or more conditions defined by the conditional data, and
initiates the transmission of context-specific data elements assigned to conditional data, which define a condition complied with by the second mobile communication terminal (3), to the first mobile communication terminal (3, 3') via a mobile radio network.

## Revendications

1. Système informatique (2) destiné à transmettre des données dépendant du contexte par l'intermédiaire d'un réseau radio mobile à un premier terminal de communication mobile (3, 3'), comprenant :
un module de réception (21) destiné à recevoir et stocker des données de condition, qui sont associées à des éléments de données d'une unité fournissant des données (1),
un module de vérification de contexte (22), destiné à vérifier si un second terminal de communication mobile (3) extérieur au système informatique (2) satisfait à une ou plusieurs conditions qui sont définies par les données de condition, et
un module de transmission de données (23) destiné à déclencher la transmission d'éléments de données dépendant du contexte, qui sont associés à des données de condition, lesquelles données de condition définissent une condition satisfaite par le second terminal de communication mobile (3), au premier terminal de communication mobile (3, 3') par l'intermédiaire du réseau radio mobile.

2. Système informatique (2) selon la revendication 1, **caractérisé en ce que** le système informatique (2) est conçu pour faire référence à des données d'attribut, associées au second terminal de communication mobile (3), d'une unité de réseau (5) du réseau radio mobile et **en ce que** le module de vérification de contexte (22) est conçu pour vérifier, sur la base de ces données d'attribut actuelles et de données de condition se référant à celles-ci, si le second terminal de communication mobile (3) satisfait à la/aux condition(s).

3. Système informatique (2) selon l'une des revendications 1 ou 2, **caractérisé en ce que** le module de vérification du contexte (22) est conçu pour vérifier, sur la base de données d'attribut actuelles associées au second terminal de communication mobile (3) et de données de condition qui se référent à celles-ci, si le second terminal de communication mobile (3) satisfait à la/aux condition(s), dans lequel lesdites données d'attribut actuelles comprennent une indication choisie parmi une position géographique, un point d'accès au réseau, une identification de réseau, une adresse de réseau, un type de réseau, une identification de données, un certificat, un mot de passe, un type de terminal et une configuration de terminal.

4. Système informatique (2) selon l'une quelconque des revendications 1 à 3, **caractérisé en ce que** le module de réception (21) est conçu pour recevoir une preuve de satisfaction de condition du second terminal de communication mobile (3), **en ce que** le module de vérification de contexte (22) est conçu pour vérifier la preuve de satisfaction de condition et pour déterminer des données de condition qui sont associées à la preuve de satisfaction de condition et **en ce que** le module de transmission de données (23) est conçu pour déclencher la transmission d'éléments de données dépendant du contexte, qui sont associés aux données de condition déterminées, au premier terminal de communication mobile (3, 3') par l'intermédiaire du réseau radio mobile.

5. Système informatique (2) selon l'une quelconque des revendications 1 à 4, **caractérisé en ce que** le module de réception (21) est conçu pour recevoir les éléments de données associés aux données de condition de l'unité de fourniture de données (1) et pour stocker les éléments de données associés aux données de condition, et **en ce que** le module de transmission de données (23) est conçu pour transmettre les éléments de données dépendant du contexte au premier terminal de communication (3, 3').

6. Système informatique (2) selon l'une des revendications 1 à 5, **caractérisé en ce que** le module de réception (21) est conçu pour recevoir et stocker des indications d'association qui associent les données de condition aux éléments de données de l'unité de fourniture de données (1), et **en ce que** le module de transmission de données (23) est conçu pour déclencher la transmission des éléments de données dépendant du contexte par transmission d'une instruction de déblocage à l'unité de fourniture de données (1).

7. Système informatique (2) selon l'une des revendications 1 à 6, **caractérisé en ce que** les éléments de données comprennent au moins un élément de données provenant d'un paramètre de fonctionnement destiné au premier terminal de communication mobile (3, 3'), un message électronique, une valeur de données électronique et un élément de logiciel destiné à une application logicielle.

8. Système informatique (2) selon l'une des revendications 1 à 7, **caractérisé en ce que** le module de réception (21) est conçu pour recevoir et stocker des instructions qui sont associées aux données de condition et/ou aux éléments de données dépendant du contexte, et **en ce que** le module de transmission de données (23) est conçu pour déclencher la transmission des éléments de données dépendant du contexte d'une manière qui correspond aux instructions concernées, dans lequel certains des éléments de données dépendant du contexte sont transmis au premier terminal de communication mobile (3, 3') et/ou à un autre dispositif.

9. Système informatique (2) selon l'une quelconque des revendications 1 à 8, **caractérisé en ce que** le module de vérification de contexte (22) est conçu pour examiner périodiquement le/les condition(s) définie(s) par les données de condition ou sur la base d'un message reçu.

10. Système informatique (2) selon l'une quelconque des revendications 1 à 9, **caractérisé en ce que** le premier terminal de communication mobile (3, 3') et le second terminal de communication mobile (3) sont un même terminal de communication mobile (3).

11. Système informatique (2) selon l'une quelconque des revendications 1 à 10, **caractérisé en ce que** l'unité de fourniture de données (1) est disposée dans le système informatique (2).

12. Procédé de transmission de données dépendant du contexte à un premier terminal de communication mobile (3, 3') par l'intermédiaire d'un réseau radio mobile, consistant à :
transmettre (S10, S20) à un système informatique (2) des données de condition, qui sont associées à des éléments de données d'une unité fournissant des données (1), de l'unité de fourniture de données (1),
recevoir et stocker les données de condition dans le système informatique (2),
vérifier (S11, S21) dans le système informatique (2) si un second terminal de communication mobile (3) extérieur au système informatique (2) satisfait à une ou plusieurs condition(s) qui est/sont définie(s) par les données de condition, et
déclencher (S22), par l'intermédiaire du système informatique (2), la transmission d'éléments de données dépendant du contexte, qui sont associés à des données de condition, lesquelles données de condition définissent une condition satisfaite par le second terminal de communication mobile (3), au premier terminal de communication mobile (3, 3') par l'intermédiaire du réseau radio mobile.

13. Procédé selon la revendication 12, **caractérisé en ce que** le système informatique (2) fait référence à des données d'attributs actuelles, associées au second terminal de communication mobile (3), d'une unité de réseau (5) du réseau radio mobile, et **en ce que** le système informatique (2) vérifie (S11, S21), sur la base de ces données d'attributs actuelles et des données de condition se référant à celles-ci, si le second terminal de communication mobile (3) satisfait à la/aux condition(s).

14. Procédé selon l'une des revendications 12 ou 13, **caractérisé en ce que** le système informatique (2) vérifie (S11, S21), sur la base de données d'attributs actuelles associées au second terminal de communication mobile (3) et de données de condition qui se référent à celles-ci, si le second terminal de communication mobile (3) satisfait à la/aux condition(s), dans lequel lesdites données d'attributs actuelles comprennent au moins une indication choisie parmi une position géographique, un point d'accès au réseau, une identification de réseau, une adresse de réseau, un type de réseau, une identification d'abonné, un certificat, un mot de passe, un type de terminal et une configuration de terminal.

15. Procédé selon l'une quelconque des revendications 12 à 14, **caractérisé en ce que** le second terminal de communication mobile (3) transmet une instruction de satisfaction de condition au système informatique (2) (S20), **en ce que** le système informatique (2) vérifie l'instruction de satisfaction de condition et détermine des données de condition qui sont associées à l'instruction de satisfaction de condition, et **en ce que** le système informatique (2) déclenche la transmission des éléments de données dépendant du contexte, qui sont associés aux données de condition déterminées, au premier terminal de communication mobile (3, 3') par l'intermédiaire du réseau radio mobile.

16. Procédé selon l'une quelconque des revendications 12 à 15, **caractérisé en ce que** l'unité de fourniture de données (1) transmet (S10) au système informatique (2) les éléments de données associées aux données de condition, **en ce que** le système informatique (2) stocke les éléments de données reçus et associés aux données de condition, et **en ce que** le système informatique (2) transmet (S12) les éléments de données dépendant du contexte au premier terminal de communication mobile (3, 3').

17. Procédé selon l'une quelconque des revendications 12 à 16, **caractérisé en ce que** l'unité de fourniture de données (1) transmet (S20) au système informatique (2) des indications d'association qui associent les données de condition aux éléments de données de l'unité de fourniture de données (1), **en ce que** le système informatique (2) reçoit et stocke les indications d'association, et **en ce que** le système informatique (2) déclenche la transmission des éléments de données dépendant du contexte en transmettant (S22) une instruction de déblocage à l'unité de fourniture de données (1).

18. Procédé selon l'une quelconque des revendications 12 à 17, **caractérisé en ce que** les éléments de données comprennent au moins un élément de données choisi parmi un paramètre de fonctionnement destiné au premier terminal de communication mobile (3, 3'), un message électronique, une valeur de données électronique et un élément logiciel destiné à une application logicielle.

19. Procédé selon l'une quelconque des revendications 12 à 18, **caractérisé en ce que** la transmission (S12, S13, S23, S24) des éléments de données dépendant du contexte est déclenchée d'une manière qui correspond à des instructions qui sont associées aux données de condition et/ou aux éléments de données dépendant du contexte, dans lequel certains des éléments de données dépendant du contexte sont transmis au premier terminal de communication mobile (3, 3') et/ou à un autre dispositif.

20. Procédé selon l'une quelconque des revendications 12 à 19, **caractérisé en ce que** le système informatique (2) vérifie (S11, S21) périodiquement ou sur la base d'un message reçu la/les condition(s) définie(s) par l'intermédiaire des données de condition.

21. Procédé selon l'une quelconque des revendications 12 à 20, **caractérisé en ce que** le premier terminal de communication mobile (3, 3') et le second terminal de communication mobile (3) sont un même terminal de communication mobile (3).

22. Produit de programme informatique, comprenant des moyens à programmes informatiques destinés à commander un ou plusieurs processeurs d'un ordinateur de manière à ce que l'ordinateur reçoive et stocke des données de condition qui sont associées à des éléments de données d'une unité fournissant des données (1), vérifie si un second terminal de communication mobile (3) extérieur à l'ordinateur satisfait une ou plusieurs conditions qui sont définies par les données de condition, et
déclenche la transmission d'éléments de données dépendant du contexte, qui sont associés à des données de condition, lesquelles données de condition définissent une condition satisfaite par le second terminal de communication mobile (3), au premier terminal de communication mobile (3, 3') par l'intermédiaire d'un réseau radio mobile.
